# FASCICULE DE BREVET EUROPEEN

(11) **EP 2 986 425 B1**
(45) Date de publication et mention de la délivrance du brevet: **14.12.2016**
(21) Numéro de dépôt: 14721471.2
(22) Date de dépôt: 10.04.2014
(51) Int. Cl.: B25J 19/00, B63B 9/00, B63B 17/00, B63B 57/00

(54) **ÉQUIPEMENT POUR EFFECTUER DES OPÉRATIONS DE MAINTENANCE ET/OU D'INSPECTION À L'INTÉRIEUR D'UNE CUVE ET PROCÉDÉ DE MONTAGE D'UN TEL ÉQUIPEMENT**
VORRICHTUNG ZUR DURCHFÜHRUNG VON WARTUNGS- UND/ODER INSPEKTIONSARBEITEN IM INNEREN EINES TANKS UND VERFAHREN ZUR INSTALLATION SOLCH EINER VORRICHTUNG
EQUIPMENT FOR CARRYING OUT MAINTENANCE AND/OR INSPECTION OPERATIONS INSIDE A TANK AND METHOD FOR INSTALLING SUCH EQUIPMENT

(30) Priorité: 15.04.2013 FR 1353405
(43) Date de publication de la demande: 24.02.2016
(73) Titulaire: GAZTRANSPORT ET TECHNIGAZ, 78470 Saint Rémy lès Chevreuse (FR)
(72) Inventeur: CHARPENTIER, Benjamin, F-75013 Paris (FR); VENAULT, Catalina, F-76620 Le Havre (FR); CLEMONT, Romain, F-92340 Bourg la Reine (FR); VIRGL, Alain, F-89140 Pont Sur Yonne (FR)
(74) Mandataire: Loyer & Abello
(86) Numéro de dépôt international: PCT/FR2014/050872
(87) Numéro de publication internationale: WO 2014/170587

(56) Documents cités:
- FR-A1- 2 134 034
- FR-A1- 2 658 947
- JP-A- H10 238 699

## Description

### Domaine technique

L'invention se rapporte aux équipements de maintenance et/ou d'inspection de cuve et concerne, notamment, la maintenance et l'inspection des cuves de navires marchands, employés pour le transport de gaz naturel liquéfié.

L'invention concerne plus particulièrement un équipement pour effectuer des opérations de maintenance et/ou d'inspection à l'intérieur d'une cuve et un procédé de montage d'un tel équipement.

### Arrière-plan technologique

Les cuves de navire marchand font régulièrement l'objet d'opérations de maintenance ou d'inspection, tels que des opérations de nettoyage, de soudage, de contrôle ou de détection de fuite.

Pour réaliser ces opérations de maintenance et d'inspection, il est connu de fixer des outils de maintenance, des nacelles aptes à transporter des techniciens ou des outils d'inspection, tels que des caméras, aux extrémités d'un bras articulé. Le bras articulé est apte à se déplacer à l'intérieur de la cuve de telle sorte que son extrémité puisse se déplacer à proximité des différentes parois de la cuve.

Il est également connu d'introduire en entier dans la cuve un bras articulé muni de moyens de propulsion autonome, comme le montre le document JP H10 238699 A.

Généralement, pour accéder à l'intérieur d'une cuve et réaliser de telles opérations de maintenance et d'inspection, une ouverture est ménagée dans une paroi supérieure de la cuve. Cette ouverture traverse le système de double coque du navire et débouche sur le pont du navire. Dans le cas d'une unité flottante de stockage et de regazéification (FSRU) ou d'une unité flottante de production et de stockage déporté (FPSO), un plafond servant à supporter des équipements est situé au dessus du pont du navire et constitue un espace restreint au-dessus de l'ouverture. L'accès à l'ouverture est donc relativement difficile.

Le document FR2 658 947 A1 présente un ensemble prêt-à-monter pour réaliser un équipement de maintenance d'une enceinte contenant des éléments irradiés. Cependant, cet ensemble n'est pas muni d'un bras articulé et ne permettrait donc pas d'effectuer facilement des opérations sur toute la surface d'une cuve. En outre, sa mise en place sur l'enceinte est longue et fastidieuse.

Ainsi, l'introduction dans la cuve, des équipements de maintenance et d'inspection, au travers de l'ouverture ménagée dans la paroi supérieure de la cuve est particulièrement complexe à mettre en oeuvre.

### Résumé

Une idée à la base de l'invention est de proposer un ensemble prêt-à-monter pour la réalisation d'un équipement, destiné à effectuer des opérations de maintenance et/ou d'inspection dans une cuve, qui soit simple, fiable et puise être introduit dans la cuve via un espace réduit.

Selon un mode de réalisation, l'invention fournit un ensemble prêt-à-monter pour la réalisation d'un équipement, destiné à effectuer des opérations de maintenance et/ou d'inspection, à l'intérieur d'une cuve présentant une paroi supérieure pourvue d'une ouverture, ledit ensemble comportant :
- un lot d'éléments destinés à former une colonne de support d'un bras articulé, ledit lot comportant :
   - au moins un élément d'allonge comportant une première extrémité pourvue d'un premier organe d'attache et une seconde extrémité pourvue d'un second organe d'attache,
   - un premier élément de bout de colonne portant ledit bras articulé, ledit premier élément de bout de colonne comportant une extrémité pourvue d'un organe d'attache apte à coopérer avec le premier organe d'attache d'un élément d'allonge afin de solidariser le premier élément de bout de colonne à un élément d'allonge ;
   - un second élément de bout de colonne comportant une première extrémité pourvue d'un organe d'attache apte à coopérer avec le second organe d'attache d'un élément d'allonge afin de solidariser le second élément de bout de colonne à un élément d'allonge et une seconde extrémité portant une bride de fixation agencée pour fixer la colonne à la périphérie de l'ouverture; et
- une bride d'assistance au montage comportant des organes d'ancrage destinés à coopérer avec la périphérie de l'ouverture de la cuve, ladite bride d'assistance au montage étant équipée d'un premier organe de fixation provisoire,
dans lequel l'élément d'allonge et le premier élément de bout de colonne sont chacun équipés d'un second organe de fixation provisoire apte à coopérer avec le premier organe de fixation provisoire de la bride d'assistance au montage de sorte à permettre une fixation provisoire du premier élément de bout de colonne et de l'élément d'allonge, sur la bride d'assistance au montage, lors du montage de l'ensemble prêt-à-monter.

Un tel ensemble prêt-à-monter est relativement simple à assembler. En outre, un tel ensemble peut être monté dans un espace réduit car la colonne de support du bras articulé est constituée de plusieurs tronçons qui sont introduits à l'intérieur de la cuve, au fur et à mesure de son assemblage.

Selon des modes de réalisation, un tel ensemble prêt-à-monter peut comporter une ou plusieurs des caractéristiques suivantes :
- l'ensemble prêt-à-monter comporte une pluralité d'éléments d'allonge modulaires, lesdits premier et second organes d'attache d'un élément d'allonge étant respectivement aptes à coopérer avec le second et le premier organes d'attache des autres éléments d'allonge de sorte à permettre la solidarisation d'un élément d'allonge avec un ou plusieurs éléments modulaires d'allonge adjacents.
- le premier organe de fixation provisoire de la bride d'assistance au montage comporte une goupille montée mobile sur la bride d'assistance au montage et les seconds organes de fixation provisoire de l'élément d'allonge et du premier élément de bout de colonne comportent à chaque fois un orifice de réception de ladite goupille.
- l'orifice de réception de la goupille est un orifice oblong.
- l'orifice de réception de la goupille est ménagé, dans l'élément d'allonge, à proximité de sa seconde extrémité.
- l'élément d'allonge comporte un châssis s'étendant longitudinalement entre sa première et sa seconde extrémité, le premier et le second organes d'attache dudit élément d'allonge étant portés par un élément de liaison mobile, par rapport audit châssis, selon la direction longitudinale du châssis, le second élément de bout de colonne comportant un dispositif de traction apte à exercer une traction sur l'organe d'attache de la première extrémité du second élément de bout de colonne en direction de la seconde extrémité dudit second élément de bout de colonne de sorte à permettre une réduction des jeux dans la colonne de support du bras articulé, lorsque l'élément d'allonge, le premier et le second éléments de bout de colonne sont solidarisés les uns aux autres.
- le second élément de bout de colonne comporte un châssis, le dispositif de traction comportant une tige mobile par rapport audit châssis qui présente une première extrémité portant l'organe d'attache du second élément de bout de colonne et une seconde extrémité coopérant avec un système vis-écrou et/ou un vérin apte à déplacer ladite seconde extrémité en translation.
- l'élément d'allonge comporte un dispositif de mise sous tension de l'élément de liaison agencé pour exercer un effort de traction sur l'élément de liaison vers la seconde extrémité dudit élément d'allonge.
- l'élément d'allonge, le premier et le second éléments de bout de colonne comportent chacun un châssis creux afin de permettre le passage d'une personne, d'une gaine d'alimentation électrique et/ou hydraulique et/ou pneumatique du bras articulé.

Selon un mode de réalisation, l'invention concerne également un équipement comportant un ensemble prêt-à-monter susmentionné dans un état monté, dans lequel la bride d'assistance au montage est montée en périphérie d'une ouverture d'une paroi supérieure d'une cuve, le premier élément de bout de colonne, le second élément de bout de colonne et au moins un élément d'allonge sont solidarisés les uns aux autres, et la bride de fixation du second élément de bout de colonne est fixée en périphérie de l'ouverture.

Selon un mode de réalisation, l'invention propose aussi un procédé d'assemblage d'un ensemble prêt-à-monter susmentionné, sur une cuve présentant une paroi supérieure pourvue d'une ouverture, ledit procédé comportant successivement :
- ancrer la bride d'assistance au montage sur la paroi supérieure de la cuve, en périphérie de son ouverture ;
- introduire le premier élément de bout de colonne, à l'intérieur de la cuve, au travers de l'ouverture, et fixer le premier élément de bout de colonne sur la bride d'assistance au montage, au moyen du premier organe de fixation provisoire de la bride d'assistance au montage et du second organe de fixation provisoire du premier élément de bout de colonne;
- solidariser un élément d'allonge au premier élément de bout de colonne, au moyen du premier organe d'attache de l'élément d'allonge et de l'organe d'attache du premier élément de bout de colonne ;
- libérer la fixation du premier élément de bout de colonne sur la bride d'assistance au montage ;
- introduire l'élément d'allonge, solidaire du premier élément de bout de colonne, à l'intérieur de la cuve, au travers de l'ouverture, et fixer ledit élément d'allonge sur la bride d'assistance au montage, au moyen du premier organe de fixation provisoire de la bride d'assistance au montage et du second organe de fixation provisoire de l'élément d'allonge ;
- solidariser le second élément de bout de colonne sur l'élément d'allonge fixé sur la bride d'assistance au montage, au moyen de l'organe d'attache du second élément de bout de colonne et du second organe d'attache de l'élément d'allonge ;
- libérer la fixation de l'élément d'allonge, fixé sur la bride d'assistance au montage ;
- fixer la bride de fixation à la périphérie de l'ouverture de la cuve.

Dans un mode de réalisation, la bride de fixation du second élément de bout de colonne est descendue en appui sur la bride d'assistance au montage.

Dans un mode de réalisation, le procédé d'assemblage comporte, en outre, à la suite de la fixation de l'élément d'allonge sur la bride d'assistance au montage, une ou plusieurs fois la succession des étapes suivantes :
- solidariser un élément d'allonge suivant à un élément d'allonge précédent ;
- libérer la fixation de l'élément d'allonge précédent ;
- introduire l'élément d'allonge suivant, à l'intérieur de la cuve, au travers de l'ouverture, et fixer ledit élément d'allonge suivant sur la bride d'assistance au montage au moyen du second organe de fixation provisoire de l'élément d'allonge suivant.

Dans un mode de réalisation, le procédé comporte, en outre, une étape de réduction des jeux dans la colonne de support d'un bras articulé, lors de laquelle on applique un effort de traction, vers le haut, sur l'organe d'attache du premier élément de bout de colonne.

### Brève description des figures

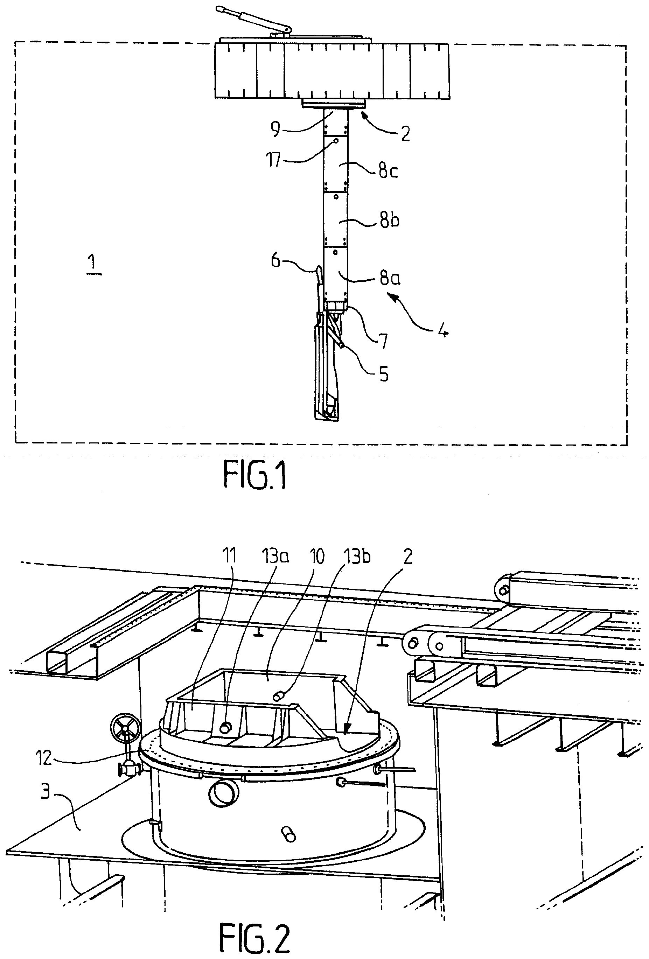

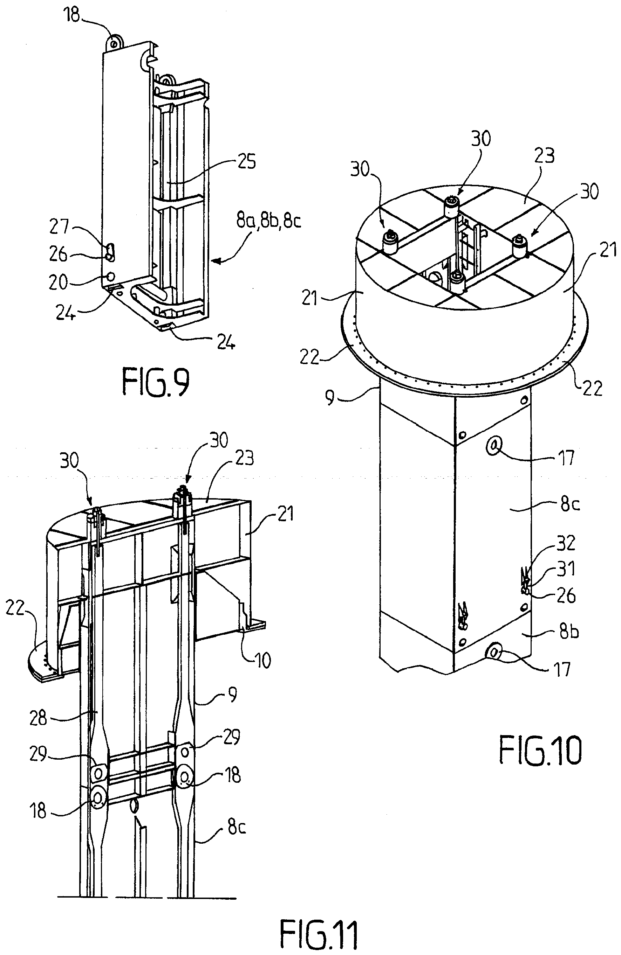

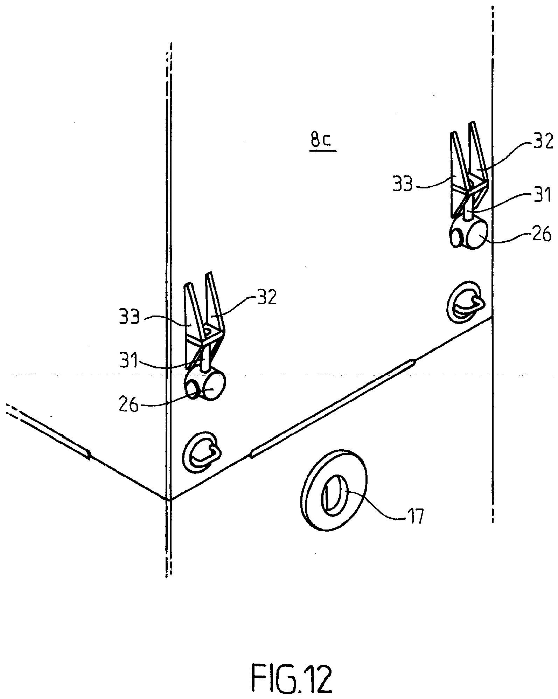

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue, schématique, d'une cuve pourvue d'une ouverture ménagée dans une paroi supérieure et d'un équipement pour effectuer des opérations de maintenance et/ou d'inspection, dans un état monté, à l'intérieur de la cuve.
- **Les** **figures 2 à 8** sont des vues, en perspective, illustrant les étapes successives du procédé d'assemblage dudit équipement ;
- **La** **figure 9** est une vue, en coupe, d'un des éléments d'allonges d'une colonne de support d'un bras articulé.
- **La** **figure 10** est une représentation, en perspective, illustrant l'extrémité supérieure de la colonne de support et sa fixation sur la cuve, en périphérie de l'ouverture.
- **La** **figure 11** est une vue en coupe de l'extrémité supérieure de la colonne de support, représentée sur la figure 10.
- **La** **figure 12** est une vue détaillée de la figure 10 illustrant un dispositif de mise sous tension d'un élément d'allonge.

### Description détaillée de modes de réalisation

La figure 1 représente, de manière schématique, une cuve 1 pour le stockage et/ou le transport d'un fluide, tel que du gaz naturel liquéfié. La cuve 1 comporte une ouverture 2 qui est ménagée dans une paroi supérieure 3. Dans certaines cuves 1, cette ouverture 2 sert, lorsque la cuve 1 est remplie de gaz naturel liquéfié, à collecter les gaz évaporés dans la cuve 1, afin de les acheminer vers une installation de reliquéfaction ou vers un brûleur. Une telle cuve 1 peut faire partie d'une installation de stockage terrestre, par exemple pour stocker du GNL ou être installée dans une structure flottante, côtière ou en eau profonde, notamment un navire méthanier, une unité flottante de stockage et de regazéification (FSRU), une unité flottante de production et de stockage déporté (FPSO) et autres.

Un équipement 4 pour la maintenance et/ou l'inspection est disposé à l'intérieur de la cuve 1 et fixé sur la paroi 3 en périphérie de l'ouverture 2.

L'équipement 4 comporte un bras articulé 5, illustré sur la figure 1 dans un état replié. L'extrémité 6 dudit bras articulé 5 est susceptible de recevoir une nacelle ou un outil d'inspection ou de maintenance, tel qu'une caméra, un appareil de nettoyage ou un appareil de soudage, par exemple. Le bras articulé 5 est déployable et mobile à l'intérieur de la cuve 1. Un tel bras articulé 5 est bien connu de l'homme du métier et ne sera donc pas décrit davantage.

L'équipement 4 comporte, en outre, une colonne de support du bras articulé permettant de disposer ledit bras articulé 5, à l'intérieur de la cuve 1, à une hauteur telle que l'extrémité 6 du bras articulé 5 est apte à se déplacer à proximité des parois de la cuve 1 lorsque le bras articulé 5 se déploie. A titre d'exemple, une telle colonne de support présente une longueur de l'ordre de 10 à 20 mètres. La colonne de support comporte un élément inférieur 7 de bout de colonne portant ledit bras articulé 5, une pluralité d'éléments d'allonge 8a, 8b, 8c, trois dans le mode de réalisation représenté, et un élément supérieur 9 de bout de colonne portant une bride de fixation permettant de fixer ladite colonne sur la paroi supérieure 3.

Nous décrirons maintenant, en relation avec les figures 2 à 8, un procédé d'assemblage d'un tel équipement 4.

La figure 1 représente une bride 10 d'assistance au montage de l'équipement 4. La bride 10 comporte un châssis 11 et un collier d'ancrage 12 présentant une pluralité d'orifices permettant le passage de vis d'ancrage, non représentés, destinés à coopérer avec des orifices, ménagés sur le pourtour de l'ouverture 2. Le châssis 11 comporte une ouverture centrale dont la forme est adaptée pour guider les éléments de colonne 7, 8a, 8b, 8c, 9 lors de leur introduction à l'intérieur de la cuve 1. Le châssis 11 comporte en outre des organes de fixation provisoire aptes à permettre la fixation provisoire d'éléments de colonne 7, 8a, 8b, 8c, 8d sur ladite bride 10, lors de l'assemblage de la colonne. Dans le mode de réalisation représenté, les organes de fixation provisoire comportent deux goupilles 13a, 13b montées mobiles, dans des orifices débouchant dans l'ouverture centrale de la bride 10, entre une position de verrouillage et une position de libération.

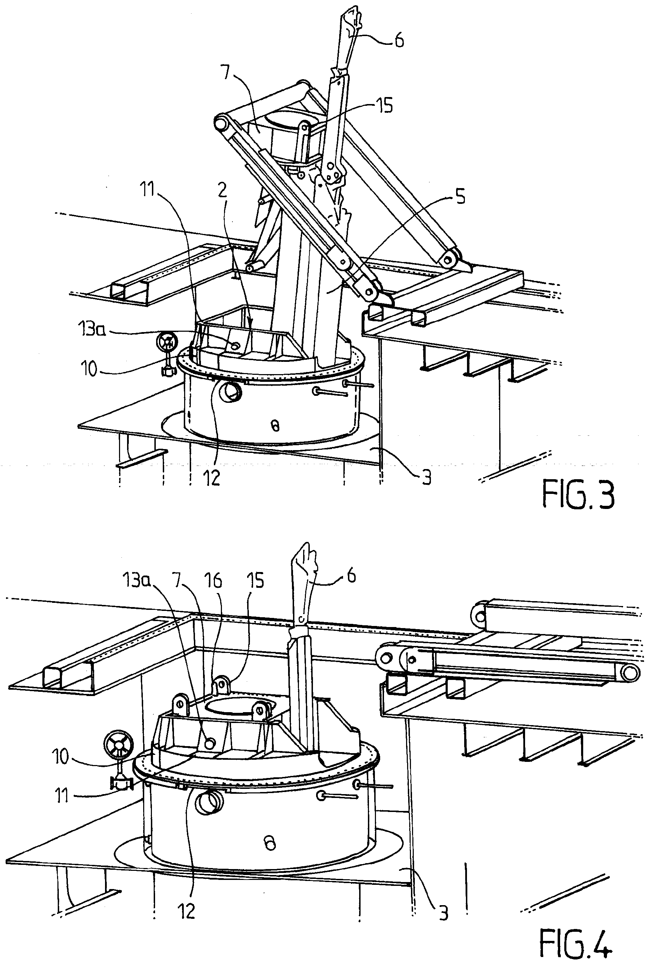

Par la suite, lorsque la bride 10 a été ancrée sur la périphérie de l'ouverture 2, l'élément inférieur 7 de bout de colonne, qui porte le bras articulé 5, peut être introduit, à l'intérieur de la cuve 1, au travers de l'ouverture 2, tel qu'illustré sur la figure 3. L'élément inférieur 7 de bout de colonne est alors fixé de manière provisoire sur la bride 10 comme représenté sur la figure 4. Pour ce faire, l'élément inférieur 7 de bout de colonne comporte des orifices, non représentés, qui sont agencés pour coopérer avec les goupilles 13a, 13b. Les goupilles 13a, 13b assurent ainsi, dans leur position de verrouillage, une fixation provisoire de l'élément inférieur 7 de bout de colonne sur la bride 10.

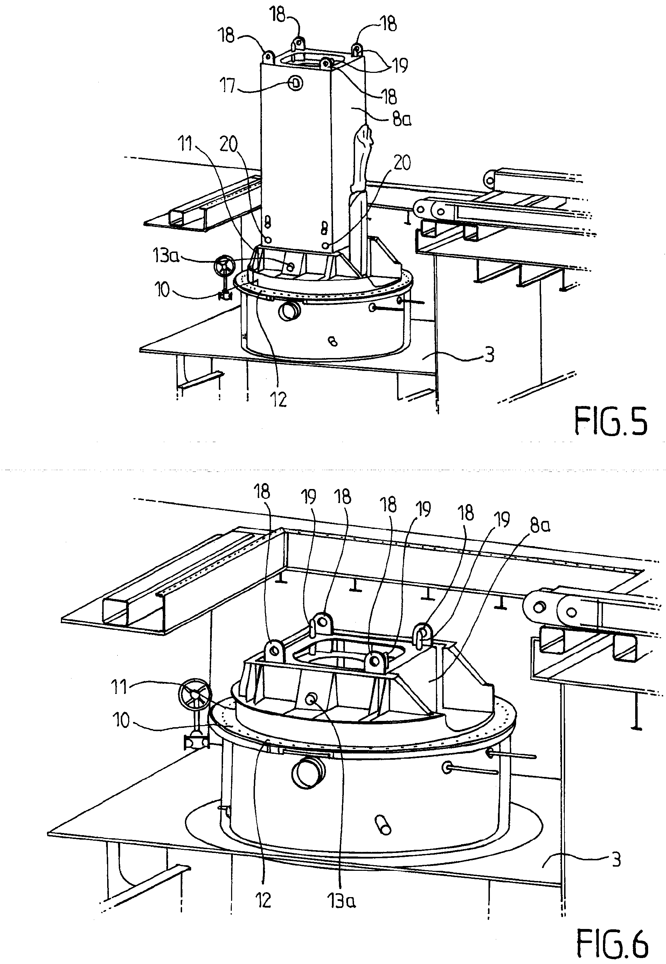

L'extrémité supérieure de l'élément inférieur 7 de bout de colonne est équipée d'une pluralité d'organes d'attache 15 destinés à coopérer avec des organes d'attaches complémentaires portés par l'extrémité inférieure d'un l'élément d'allonge 8a adjacent. L'élément inférieur de bout de colonne 7 est ici équipé d'organes femelles 15 destinés à coopérer avec des organes mâles portés par l'extrémité inférieure de l'élément d'allonge 8a adjacent, les organes femelles 15 et les organes mâles présentant des orifices pour permettre l'insertion d'une goupille assurant la fixation des organes mâles 15 aux organes femelles. Il va de soi que les organes d'attaches 15 sont ici décrits et représentés à titre d'exemple et que tout autre type d'organe peut être envisagé. Dans le mode de réalisation représenté, l'extrémité inférieure de l'élément inférieur de bout de colonne 7 comporte en outre des pions 16 de positionnement aptes à coopérer avec des orifices complémentaires, ménagés dans l'extrémité inférieure de l'élément d'allonge 8a. Ainsi, l'élément d'allonge 8a peut être solidarisé à l'élément inférieur de bout de colonne 7, tel que représenté sur la figure 5.

Par la suite, les goupilles 13a, 13b peuvent être déplacées vers leur position de libération, de sorte à libérer la fixation de l'élément inférieur 7 de bout de colonne à la bride 10, et permettre l'introduction de l'élément d'allonge 8a à l'intérieur de la cuve 1, puis la fixation provisoire de l'élément d'allonge 8a sur la bride 10, tel que représenté sur la figure 6.

Afin d'assurer la fixation provisoire de l'élément d'allonge 8a sur la bride 10, le châssis de l'élément d'allonge 8a comporte des orifices 17, notamment représentés sur la figure 5, aptes à coopérer avec les goupilles 13a, 13b lorsqu'elles sont dans leur de position de verrouillage.

Les orifices 17 sont disposés à proximité de l'extrémité supérieure de l'élément d'allonge 8a de telle sorte que la majeure partie dudit élément d'allonge 8a s'étende à l'intérieur de la cuve 1, lorsque l'élément d'allonge 8a est fixé sur la bride 10. En outre, les orifices 17 présentent une forme oblongue dont la grande direction est orientée verticalement. Une telle disposition est apte à faciliter le mouvement des goupilles 13a, 13b de leur position de verrouillage, dans laquelle elles coopèrent avec les orifices 17, vers leur position de libération. En effet, la forme oblongue des orifices autorise un levage dudit élément d'allonge 8a avant le déplacement des goupilles 13a, 13b vers leur position de libération de telle sorte que les efforts, dus aux poids des éléments de la colonne, s'exerçant sur les goupilles 13a, 13b sont inhibées lors du mouvement des goupilles 13a, 13b.

L'extrémité supérieure de l'élément d'allonge 8a comporte des organes d'attache 18, représentés sur les figures 5 et 6, aptes à coopérer avec des organes d'attache complémentaires, de l'extrémité inférieure d'un élément d'allonge 8b adjacent. L'extrémité supérieure de l'élément d'allonge 8a comporte également des pions 19 de positionnement aptes à coopérer avec des orifices de forme complémentaire, formés dans l'extrémité inférieure de l'élément d'allonge 8b adjacent 8b.

Dans un mode de réalisation, les éléments d'allonge 8a, 8b, 8c sont identiques et les organes d'attache d'une des extrémités, inférieure ou supérieure, d'un élément d'allonge 8a, 8b, 8c sont aptes à coopérer avec les organes d'attache de l'autre extrémité, supérieure ou inférieure, des autres éléments d'allonge 8a, 8b, 8c. L'extrémité inférieure des éléments d'allonge 8a, 8b, 8c est ici équipée d'organes mâles destinés à coopérer avec des organes femelles 18 de forme complémentaire de l'extrémité supérieure des éléments d'allonge 8a, 8b, 8c, les organes mâles et femelles étant équipés d'orifices permettent l'introduction de goupilles 20 pour solidariser les organes mâles et femelles. Par ailleurs, l'extrémité supérieure des éléments d'allonge 8a, 8b, 8c porte des pions 19 de positionnement aptes à coopérer avec des orifices de forme complémentaires, ménagées dans l'extrémité inférieure desdits éléments d'allonge. Il va de soi qu'une disposition opposée des organes mâles et femelles respectivement sur les extrémités, supérieures et inférieures, est également possible.

Lorsque un élément d'allonge 8a est fixé sur la bride 10, un élément d'allonge suivant 8b est alors fixé sur l'élément d'allonge précédent 8b, au moyen des organes d'attache 18 décrits précédemment. Par la suite, les goupilles 13a, 13b sont déplacées vers leur position de libération de sorte à permettre la libération de la fixation de l'élément d'allonge précédent 8a sur la bride 10 et l'introduction de l'élément d'allonge suivant 8b dans la cuve 1. L'élément d'allonge suivant 8b peut alors être fixé sur la bride 10.

Ces étapes sont effectuées autant de fois que nécessaire pour permettre l'assemblage de la pluralité d'éléments d'allonge 8a, 8b, 8c.

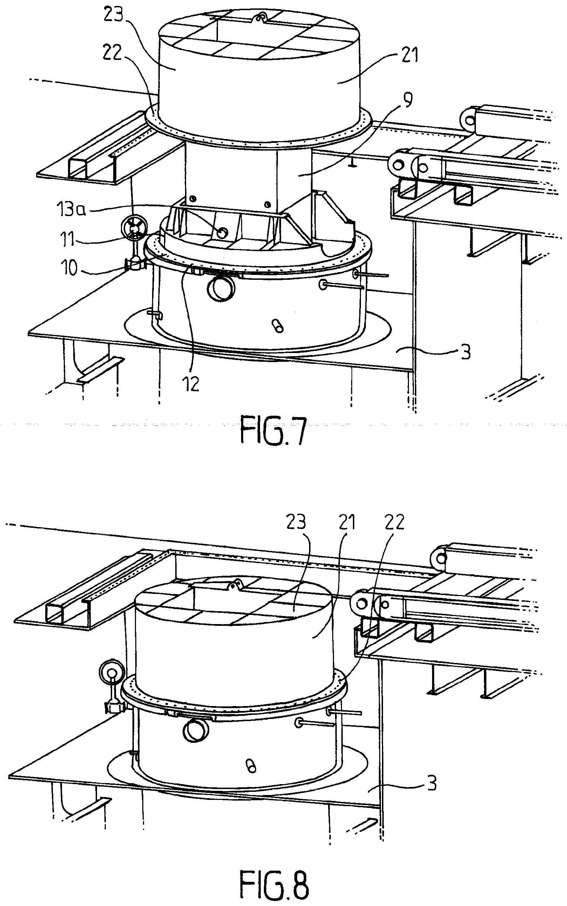

Lorsque le dernier élément d'allonge 8c a été introduit dans la cuve 1, au travers de l'ouverture 2, et fixé à la bride 10, un élément supérieur 9 de bout de colonne peut être fixé sur le dernier élément d'allonge 8c, tel que représenté sur la figure 7. Pour ce faire, l'élément supérieur 9 de bout de colonne comporte une extrémité inférieure équipée d'organes d'attache 29, représentés sur la figure 11, aptes à coopérer avec les organes d'attache 18 de l'extrémité supérieure du dernier élément d'allonge 8c. Les organes d'attache 29 de l'élément supérieur 9 de bout de colonne sont semblables aux organes d'attache de l'extrémité inférieure des éléments d'allonge 8a, 8b, 8c.

Par ailleurs, l'élément supérieur 9 de bout de colonne comporte à son extrémité supérieure une bride de fin 21. La bride de fin 21 permet la fixation de l'élément supérieur 9 de bout de colonne sur l'ouverture 2. Pour ce faire, la bride de fin 21 comporte un châssis 23 apte à envelopper le corps de la bride 10 et un collier annulaire 22 comportant une pluralité d'orifices permettant le passage de vis, non représentés.

Lorsque la fixation provisoire du dernier élément d'allonge 8c sur la bride 10 est libérée, l'élément supérieur 9 de bout de colonne peut être descendu jusqu'à ce que le collier annulaire 22 de la bride de fin 21 vienne reposer contre le collier annulaire 12 de la bride 10. La bride de fin 21 peut alors être fixée à la paroi supérieure 3, directement ou par l'intermédiaire de la bride 10.

Enfin, lorsque la totalité des éléments 7, 8a, 8b, 8c, 9 de la colonne est assemblée et fixée sur l'ouverture 2, on procède à une étape de réduction des jeux dans la colonne, afin de la rigidifier.

Afin de permettre une telle réduction des jeux, les organes d'attache 18 de l'extrémité supérieure des éléments d'allonge 8a, 8b, 8c et les organes d'attache 24 de leur extrémité inférieure sont portés par une barre de liaison 25, représentée sur la figure 9. La barre de liaison 25 est montée coulissante, à l'intérieur du châssis des éléments d'allonge 8a, 8b, 8c, selon la direction longitudinale desdits éléments d'allonge 8a, 8b, 8c. Cette barre de liaison 25 permet la transmission d'un effort de traction, des organes d'attache 18 de l'extrémité supérieure des éléments d'allonge 8a, 8b, 8c vers les organes d'attache 24 de leur extrémité inférieure.

Par ailleurs, l'élément supérieur 9 de bout de colonne est équipé de dispositifs de traction apte à exercer une traction, vers le haut de la cuve 1, sur les organes d'attache 15 de l'élément inférieur 7 de bout de colonne, au travers des organes d'attache 18, 24 et des barres de liaison 25 des éléments d'allonge 8a, 8b, 8c, afin de réduire les jeux entre les éléments de colonne 7, 8a, 8b, 8c, 9.

Un dispositif de traction comporte une tige de traction 28 montée coulissante sur le châssis de l'élément supérieur 9 de bout de colonne selon la direction longitudinale de la colonne. La tige de traction 28 porte à son extrémité inférieure un organe d'attache 29 et coopère à son extrémité supérieure avec un système vis-écrou 30 apte à déplacer en translation la tige de traction 28. Dans un mode de réalisation alternatif non représenté, l'effort de traction sur les organes d'attache 29 est exercé via plusieurs vérins.

Par ailleurs, il va de soi que la transmission des efforts de traction peut être réalisée par tout autre moyen approprié que les barres de liaison 25. En particulier, il est possible de transmettre les efforts de traction via des câbles ou tirants par exemple.

En outre, dans le mode de réalisation représenté, chacun des éléments d'allonge 8a, 8b, 8c comporte un dispositif de mise sous tension, représentés sur les figures 9, 10 et 11 permettant d'exercer une traction, vers le haut, sur les moyens d'attache 24 de l'extrémité inférieure desdits éléments d'allonge 8a, 8b, 8c, au fur et à mesure de leur assemblage.

Pour ce faire, la barre de liaison 25 est solidarisée à un coulisseau 26, mobile dans une glissière 27 ménagée dans le châssis des éléments d'allonge 8a, 8b, 8c et s'étendant selon sa direction longitudinale. L'extrémité du coulisseau 26, représentée de manière détaillée sur la figure 12, faisant saillie à l'extérieur du châssis, comporte un alésage coopérant avec un organe de retenue 31. L'organe de retenue 31 présente une tête 32 qui coopère avec une platine d'appui 33 portée par le châssis. L'organe de retenu est par exemple une tige fileté coopérant avec un filetage ménagé dans l'orifice de l'extrémité du coulisseau 26.

Un tel dispositif de mise sous tension permet de réaliser une réduction préliminaire des jeux dans la colonne, au fur et à mesure de l'assemblage des éléments d'allonge 8a, 8b, 8c.

Nous notons, par ailleurs, que le châssis des éléments d'allonge 8a, 8b, 8c, et les éléments, inférieur 7 et supérieur 9, de bout de colonne présentent sensiblement une forme de parallélépipède rectangle. Les châssis des éléments de colonne 7, 8a, 8b, 8c, 9 sont creux et leurs faces inférieures et supérieures sont ouvertes. Ainsi, il est possible de passer des personnes, des gaines d'alimentation électrique, hydraulique et/ou pneumatique du bras articulé, au travers de la colonne de support du bras articulé.

On notera qu'afin de permettre le passage de personnes, les châssis des éléments d'allonge 8a, 8b, 8c et des éléments, inférieur 7 et supérieur 9, de bout de colonne portent une échelle permettant de descendre à l'intérieur de la cuve 1. Par ailleurs, le châssis de l'élément d'allonge 8a peut être équipée d'une ouverture latérale, non représentée, permettant aux personnes d'accéder à l'intérieur de la cuve 1.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Ensemble prêt-à-monter pour la réalisation d'un équipement, destiné à effectuer des opérations de maintenance et/ou d'inspection, à l'intérieur d'une cuve (1) présentant une paroi supérieure (3) pourvue d'une ouverture (2), ledit ensemble comportant :
- un lot d'éléments destinés à former une colonne de support d'un bras articulé (5), ledit lot comportant :
- au moins un élément d'allonge (8a, 8b, 8c) comportant une première extrémité pourvue d'un premier organe d'attache (24) et une seconde extrémité pourvue d'un second organe d'attache (18),
- un premier élément (7) de bout de colonne portant ledit bras articulé (5), ledit premier élément (7) de bout de colonne comportant une extrémité pourvue d'un organe d'attache (15) apte à coopérer avec le premier organe d'attache (24) d'un élément d'allonge (8a, 8b, 8c) afin de solidariser le premier élément (7) de bout de colonne à un élément d'allonge (8a, 8b, 8c) ;
- un second élément (9) de bout de colonne comportant une première extrémité pourvue d'un organe d'attache (29) apte à coopérer avec le second organe d'attache (18) d'un élément d'allonge (8a, 8b, 8c) afin de solidariser le second élément (9) de bout de colonne à un élément d'allonge (8a, 8b, 8c) et une seconde extrémité portant une bride de fixation (21) agencée pour fixer la colonne à la périphérie de l'ouverture (2); et
- une bride (10) d'assistance au montage comportant des organes d'ancrage destinés à coopérer avec la périphérie de l'ouverture (2) de la cuve (1), ladite bride (10) d'assistance au montage étant équipée d'un premier organe (13a, 13b) de fixation provisoire,
dans lequel l'élément d'allonge (8a, 8b, 8c) et le premier élément (7) de bout de colonne sont chacun équipés d'un second organe (17) de fixation provisoire apte à coopérer avec le premier organe (13a, 13b) de fixation provisoire de la bride (10) d'assistance au montage de sorte à permettre une fixation provisoire du premier élément (7) de bout de colonne et de l'élément d'allonge (8a, 8b, 8c), sur la bride (10) d'assistance au montage, lors du montage de l'ensemble prêt-à-monter.

2. Ensemble prêt-à-monter selon la revendication 1, comportant une pluralité d'éléments d'allonge (8a, 8b, 8c) modulaires, lesdits premier et second organes d'attache (24, 18) d'un élément d'allonge (8a, 8b, 8c) étant respectivement aptes à coopérer avec le second et le premier organes d'attache (18, 24) des autres éléments d'allonge (8a, 8b, 8c) de sorte à permettre la solidarisation d'un élément d'allonge (8a, 8b, 8c) avec un ou plusieurs éléments modulaires d'allonge (8a, 8b, 8c) adjacents.

3. Ensemble prêt-à-monter selon la revendication 1 ou 2, dans lequel le premier organe de fixation provisoire de la bride (10) d'assistance au montage comporte une goupille (13a, 13b) montée mobile sur la bride (10) d'assistance au montage et dans lequel les seconds organes de fixation provisoire de l'élément d'allonge et du premier élément de bout de colonne comportent à chaque fois un orifice (17) de réception de ladite goupille (13a, 13b).

4. Ensemble prêt-à-monter selon la revendication 3, dans lequel l'orifice (17) de réception de la goupille est un orifice oblong.

5. Ensemble prêt-à-monter selon la revendication 4, dans lequel l'orifice (17) de réception de la goupille est ménagé, dans l'élément d'allonge (8a, 8b, 8c) à proximité de sa seconde extrémité.

6. Ensemble prêt-à-monter selon l'une quelconque des revendications 1 à 5, dans lequel l'élément d'allonge (8a, 8b, 8c) comporte un châssis s'étendant longitudinalement entre sa première et sa seconde extrémité, le premier et le second organes d'attache (24, 18) dudit élément d'allonge (8a, 8b, 8c) étant portés par un élément de liaison (25) mobile par rapport audit châssis selon la direction longitudinale du châssis, le second élément (9) de bout de colonne comportant un dispositif de traction, apte à exercer une traction sur l'organe d'attache (29) de la première extrémité du second élément (9) de bout de colonne, en direction de la seconde extrémité dudit second élément de bout de colonne, de sorte à permettre une réduction des jeux dans la colonne de support du bras articulé lorsque l'élément d'allonge (8a, 8b, 8c), le premier et le second éléments (7, 9) de bout de colonne sont solidarisés les uns aux autres.

7. Ensemble prêt-à-monter selon la revendication 6, dans lequel le second élément (9) de bout de colonne comporte un châssis, le dispositif de traction comportant une tige (28) mobile par rapport audit châssis qui présente une première extrémité portant l'organe d'attache (29) du second élément (9) de bout de colonne et une seconde extrémité coopérant avec un système vis-écrou (30) et/ou vérin apte à déplacer ladite seconde extrémité en translation.

8. Ensemble prêt-à-monter selon la revendication 6 ou 7, dans lequel l'élément d'allonge (8a, 8b, 8c) comporte un dispositif de mise sous tension (26, 27, 21, 32, 33) de l'élément de liaison (25) agencé pour exercer un effort de traction sur l'élément de liaison (25) vers la seconde extrémité dudit élément d'allonge.

9. Ensemble prêt-à-monter selon l'une quelconque des revendications 1 à 8, dans lequel l'élément d'allonge (8a, 8b, 8c), le premier et le second éléments (7, 9) de bout de colonne comportent chacun un châssis creux afin de permettre le passage d'une personne, d'une gaine d'alimentation électrique et/ou hydraulique et/ou pneumatique du bras articulé (5).

10. Équipement, destiné à effectuer des opérations de maintenance et/ou d'inspection comportant un ensemble prêt-à-monter selon l'une des revendications 1 à 9, dans un état monté, dans lequel la bride d'assistance au montage (10) est montée en périphérie d'une ouverture (2) d'une paroi supérieure (3) d'une cuve (1), le premier élément (7) de bout de colonne, le second élément (9) de bout de colonne et au moins un élément d'allonge (8a, 8b, 8c) sont solidarisés les uns aux autres, et la bride de fixation (21) du second élément de bout de colonne est fixée en périphérie de l'ouverture (2).

11. Procédé d'assemblage d'un ensemble prêt-à-monter selon l'une quelconque des revendications 1 à 9, sur une cuve (1) présentant une paroi supérieure (3) pourvue d'une ouverture (2), ledit procédé comportant successivement :
- ancrer la bride (10) d'assistance au montage sur la périphérie de l'ouverture (2) de la cuve (1) ;
- introduire le premier élément (7) de bout de colonne, à l'intérieur de la cuve (1), au travers de l'ouverture (2), et fixer le premier élément (7) de bout de colonne sur la bride (10) d'assistance au montage, au moyen du premier organe (13a, 13b) de fixation provisoire de la bride (10) d'assistance au montage et du second organe de fixation provisoire du premier élément (7) de bout de colonne;
- solidariser un élément d'allonge (8a) au premier élément (7) de bout de colonne au moyen du premier organe d'attache (24) de l'élément d'allonge (8a) et de l'organe d'attache (15) du premier élément (7) de bout de colonne ;
- libérer la fixation du premier élément (7) de bout de colonne sur la bride (10) d'assistance au montage ;
- introduire l'élément d'allonge (8a), solidaire du premier élément (7) de bout de colonne, à l'intérieur de la cuve (1), au travers de l'ouverture (2), et fixer ledit élément d'allonge (8) sur la bride (10) d'assistance au montage, au moyen du premier organe (13a, 13b) de fixation provisoire de la bride (10) d'assistance au montage et du second organe (17) de fixation provisoire de l'élément d'allonge (8a, 8b, 8c) ;
- solidariser le second élément (9) de bout de colonne sur l'élément d'allonge (8a, 8b, 8c) fixé sur la bride d'assistance (10) au montage, au moyen de l'organe d'attache (29) du second élément (9) de bout de colonne et du second organe (18) d'attache de l'élément d'allonge (8a, 8b, 8c);
- libérer la fixation de l'élément d'allonge (8a, 8b, 8c), fixé sur la bride (10) d'assistance au montage ;
- fixer la bride de fixation (21) à la périphérie de l'ouverture (2) de la cuve (1).

12. Procédé d'assemblage selon la revendication 11, comportant en outre, à la suite de la fixation de l'élément d'allonge (8a) sur la bride d'assistance au montage, une ou plusieurs fois la succession des étapes suivantes :
- solidariser un élément d'allonge suivant (8b, 8c) à un élément d'allonge précédent (8a, 8b) ;
- libérer la fixation de l'élément d'allonge précédent (8a, 8b) ;
- introduire l'élément d'allonge suivant (8b, 8c), à l'intérieur de la cuve (1), au travers de l'ouverture (2), et fixer ledit élément d'allonge suivant (8b, 8c) sur la bride (10) d'assistance au montage au moyen du second organe (13a, 13b) de fixation provisoire de l'élément d'allonge suivant (8b, 8c).

13. Procédé d'assemblage selon la revendication 11 ou 12, comprenant une étape de réduction des jeux dans la colonne de support d'un bras articulé (5) lors de laquelle on applique un effort de traction, vers le haut, sur l'organe d'attache (15) du premier élément (7) de bout de colonne.

## Patentansprüche

1. Zum Montieren vorbereiteter Bausatz zur Herstellung einer Vorrichtung, welcher dazu bestimmt ist, Wartungs- und/oder Inspektionsarbeiten im Inneren eines Tanks (1), welcher eine obere Wand (3) aufweist, die mit einer Öffnung (2) ausgestattet ist, durchzuführen, umfassend:
- eine Anzahl von Elementen dazu bestimmt, eine Tragsäule eines Gelenkarmes (5) zu bilden, umfassend:
- mindestens ein Verlängerungselement (8a, 8b, 8c) umfassend einen ersten Endabschnitt ausgestattet mit einem ersten Befestigungselement (24) und einen zweiten Endabschnitt ausgestattet mit einem zweiten Befestigungselement (18),
- ein erstes Element (7) eines Endstückes einer Säule, welches den Gelenkarm (5) trägt, wobei dieses erste Element (7) des Endstückes der Säule einen mit einem Befestigungselement (15) ausgestatteten Endabschnitt umfasst, dazu geeignet, mit dem ersten Befestigungselement (24) eines Verlängerungselementes (8a, 8b, 8c) zusammenzuwirken, um das erste Element (7) des Endstückes der Säule mit einem Verlängerungselement (8a, 8b, 8c) fest zu verbinden;
- ein zweites Element (9) des Endstückes der Säule umfassend einen ersten Endabschnitt ausgestattet mit einem Befestigungselement (29), dazu geeignet mit dem zweiten Befestigungselement (18) eines Verlängerungselementes (8a, 8b, 8c) zusammenzuwirken, um das zweite Element (9) des Endstückes der Säule fest mit einem Verlängerungselement (8a, 8b, 8c) zu verbinden, und einen zweiten Endabschnitt umfassend einen Befestigungsflansch (21) zur Fixierung der Säulean der Peripherie der Öffnung (2); und
- einen Flansch (10) zur Unterstützung der Montage umfassend Verankerungsglieder, die dazu bestimmt sind, mit der Peripherie der Öffnung (2) des Tanks (1) zusammenzuwirken, wobei der Flansch (10) zur Unterstützung der Montage mit einem ersten provisorischen Fixierungsglied (13a, 13b) ausgestattet ist,
wobei das Verlängerungselement (8a, 8b, 8c) und das erste Element (7) des Endstückes der Säule jeweils mit einem zweiten Fixierungsglied (17) ausgestattet sind, dazu geeignet, mit dem ersten provisorischen Fixierungsglied (13a, 13b) des Flanschs (10) zur Unterstützung der Montage zusammenzuwirken, so dass eine provisorische Fixierung des ersten Elementes (7) des Endstücks der Säule und des Verlängerungselements (8a, 8b, 8c) auf dem Flansch (10) zur Unterstützung der Montage während der Montage des vorbereiteten Bausatzes ermöglicht wird.

2. Zu montierender Bausatz gemäß Anspruch 1, umfassend eine Mehrzahl von modularen Verlängerungselementen (8a, 8b, 8c), wobei die ersten und zweiten Befestigungselemente (24,18) eines Verlängerungselementes (8a, 8b, 8c) jeweils dazu in der Lage sind, mit dem ersten und zweiten Befestigungselement (18, 24) der anderen Verlängerungselemente (8a, 8b, 8c) zusammenzuwirken, so dass ein Befestigungselement (8a, 8b, 8c) fest mit einem oder mehreren angrenzenden modularen Verlängerungselementen verbunden wird.

3. Zu montierender Bausatz gemäß Anspruch 1 oder 2, wobei das erste provisorische Fixierungsglied des Flanschs (10) zur Unterstützung der Montage einen Stift (13a, 13b), welcher auf dem Flansch (10) zur Unterstützung der Montage beweglich angebracht ist, umfasst und wobei die zweiten provisorischen Fixierungsglieder des Verlängerungselementes und des ersten Elementes des Endstücks der Säule jeweils eine Öffnung (17) zur Aufnahme des Stiftes (13a, 13b) umfassen.

4. Zu montierender Bausatz gemäß Anspruch 3, wobei die Öffnung (17) zur Aufnahme des Stiftes eine längliche Öffnung ist.

5. Zu montierender Bausatz gemäß Anspruch 4, wobei die Öffnung (17) zur Aufnahme des Stiftes in dem Verlängerungselement (8a, 8b, 8c) des zweiten Endabschnittes vorgesehen ist.

6. Zu montierender Bausatz gemäß einem der Ansprüche 1 bis 5, in dem das Verlängerungselement (8a, 8b, 8c) ein Chassis längs verlaufend zwischen seinem ersten und zweiten Endabschnitt umfasst, wobei das erste und zweite Befestigungselement (24, 18) des Verlängerungselementes (8a, 8b, 8c) durch einin Bezug auf das Chassis in Längsrichtung des Chassis bewegliches Verbindungselement (25) getragen wird, wobei das zweite Element (9) des Endstücks der Säule eine Zugvorrichtung umfasst, welche dazu geeignet ist, Kräfte auf das Befestigungselement (29) des ersten Endabschnittes des zweiten Elementes (9) des Endstückes der Säule auszuüben in Richtung des zweiten Endabschnittes des zweiten Elements des Endstücks der Säule derart, dass eine Verringerung des Spiels in der Tragsäule des Gelenkarmes bei fester Verbindung des Verbindungselementes (8a, 8b, 8c) und des ersten und das zweiten Elementes (7, 9) des Endstückes der Säule miteinander.

7. Zu montierender Bausatz gemäß Anspruch 6, wobei das zweite Element (9) des Endstücks der Säule ein Chassis umfasst, wobei die Zugvorrichtung einen beweglichen Stift (28) im Verhältnis zum Chassis umfasst, wobei das Chassis einen ersten, das Befestigungselement (29) des zweiten Elements (9) des Endstücks der Säule tragenden Endabschnitt und einen zweiten Endabschnitt, welcher mit einem Schrauben-Mutter-System (30) und/oder einer Winde zusammenwirkt umfasst, dazu geeignet, den zweiten Endabschnitt in Translation zu bewegen.

8. Zu montierender Bausatz gemäß einem der Ansprüche 6 oder 7, wobei das Verlängerungselement (8a, 8b, 8c) eine Vorrichtung (26, 27, 21, 32, 33) umfasst, welche es ermöglicht, das angeordnete Verbindungselement (25) unter Spannung zu stellen, um eine Zugkraft auf das Verbindungselement (25) in Richtung des zweiten Endabschnittes des Verlängerungselementes auszuüben.

9. Zu montierender Bausatz gemäß einem der Ansprüche 1 bis 8, wobei das Verlängerungselement (8a, 8b, 8c) unddas erste und zweite Element (7, 9) des Endstücks der Säule jeweils ein holes Chassis umfassen, um den Durchgang einer Person, eines Versorgungskanals für Strom und/oder eine hydraulische und/oder pneumatische Versorgung des Gelenkarms (5) zu ermöglichen

10. Vorrichtung zur Durchführung von Wartungs- und/oder Inspektionsarbeiten umfassend eine zu montierenden Bausatz gemäß einem der Ansprüche 1 bis 9 in aufgebautem Zustand, wobei der Flansch zur Unterstützung der Montage an der Peripherie einer Öffnung (2) einer oberen Wand (3) eines Tanks (1) angebracht ist, wobei das erste Element (7) des Endstückes der Säule, das zweite Element (9) des Endstückes der Säule und mindestens ein Verlängerungselement (8a, 8b, 8c) fest miteinander verbunden sind und der Befestigungsflansch (21) des zweiten Elementes des Endstückes der Säule an der Peripherie der Öffnung (2) angebracht ist.

11. Verfahren zur Zusammensetzung eines zu montierenden Bausatzes gemäß einem der Ansprüche 1 bis 9, auf einem Tank (1), welcher eine obere Wand (3) mit einer Öffnung (2) aufweist, das Verfahren umfasst schrittweise:
- Befestigen des Flanschs (10) zur Unterstützung der Montage auf der Peripherie der Öffnung (2) des Tanks (1);
- Einführen eines ersten Elementes (7) des Endstückes der Säule durch die Öffnung (2) in das Innere des Tanks (1) und Befestigung des ersten Elementes (7) des Endstückes der Säule auf dem Flansch (10) zur Unterstützung der Montage mittels eines ersten provisorischen Fixierungsgliedes (13a, 13b) des Flanschs (10) zur Unterstützung der Montage und mittels des zweiten provisorischen Fixierungsgliedes des ersten Elementes (7) des Endstücks der Säule;
- Festes Verbinden eines Verlängerungselementes (8a) mit dem ersten Element (7) des Endstückes der Säule mittels eines ersten Befestigungselementes (24) des Verlängerungselementes (8a) und des Befestigungselementes (15) des ersten Elementes 8) des Endstücks der Säule;
- Freigeben der Fixierung des ersten Elements (7) des Endstücks der Säule auf dem Flansch (10) zur Unterstützung der Montage;
- Einführen des Verlängerungselementes (8a), fest verbunden mit dem ersten Element (7) des Endstücks der Säule, in das Innere des Tanks (1), durch die Öffnung (2) und fixieren des Verlängerungselementes (8) auf dem Flansch (10) zur Unterstützung der Montage mittels eines ersten provisorischen Fixierungsgliedes des Flanschs (10) zur Unterstützung der Montage und des zweiten provisorischen Fixierungsgliedes (17) des Verlängerungselementes (8a, 8b, 8c);
- Festes Verbinden des zweiten Elementes (9) des Endstücks der Säule auf dem Verlängerungselement des Flanschs (10) zur Unterstützung der Montage mittels des Verbindungselementes (29) des zweiten Elementes (9) des Endstückes der Säule und des zweiten Befestigungselementes (18) des Verlängerungselementes (8a, 8b, 8c);
- Freigeben der Fixierung des Verlängerungselementes (8a, 8b, 8c), fixiert auf dem Flansch (19) zur Unterstützung der Montage;
- Fixieren des Fixierungsflanschs (21) an der Peripherie der Öffnung (2) des Tanks (1).

12. Verfahren zur Zusammensetzung gemäß Anspruch 11, umfassend unter anderem nachfolgend der Fixierung des Verlängerungselementes (8a) auf dem Flansch zur Unterstützung der Montage, einmalig oder mehrfach die Abfolge der folgenden Schritte:
- Festes Verbinden eines Verlängerungselementes (8b, 8c) folgend einem vorhergehenden Verlängerungselement (8a, 8b);
- Freigeben der Fixierung des vorhergehenden Verlängerungselementes (8a, 8b);
- Einführen des folgenden Verlängerungselementes (8b, 8c) in das Innere des Tanks (1) durch die Öffnung (2) und fixieren des folgenden Verlängerungselements (8b, 8c) auf dem Flansch (10) zur Unterstützung der Montage mittels des zweiten provisorischen Befestigungselementes (13a, 13b) des nachfolgenden Verlängerungselementes (8b, 8c).

13. Verfahren zur Zusammensetzung gemäß Anspruch 11 oder 12, umfassend einen Abschnitt zur Verringerung des Spiels in der Tragsäule des Gelenkarms (5), während eine Zugkraft nach oben auf das Befestigungselement (15) des ersten Elements (7) des Endstücks der Säule angewandt wird.

## Claims

1. A ready-to-install kit for constructing equipment for carrying out maintenance and/or inspection operations inside a tank (1) having an upper wall (3) provided with an opening (2), said kit comprising:
- a set of elements intended to form a support column of an articulated arm (5), said set comprising:
- at least one extension element (8a, 8b, 8c) having a first end provided with a first attachment member (24) and a second end provided with a second attachment member (18),
- a first column end element (7) carrying said articulated arm (5), said first column end element (7) having an end provided with an attachment member (15) capable of interacting with the first attachment member (24) of an extension element (8a, 8b, 8c) in order to fix the first column end element (7) to an extension element (8a, 8b, 8c);
- a second column end element (9) having a first end provided with an attachment member (29) capable of interacting with the second attachment member (18) of an extension element (8a, 8b, 8c) in order to fix the second column end element (9) to an extension element (8a, 8b, 8c) and a second end carrying a fastening flange (21) arranged to fasten the column to the periphery of the opening (2); and
- an installation assistance flange (10), comprising securing members intended to interact with the periphery of the opening (2) in the tank (1), said installation assistance flange (10) being equipped with a first temporary fastening member (13a, 13b),
wherein the extension element (8a, 8b, 8c) and the first column end element (7) are each fitted with a second temporary fastening member (17) capable of interacting with the first temporary fastening member (13a, 13b) of the installation assistance flange (10) so as to provide a temporary fastening of the first column end element (7) and of the extension element (8a, 8b, 8c) to the installation assistance flange (10), during the installation of the ready-to-install kit.

2. The ready-to-install kit as claimed in claim 1, comprising a plurality of modular extension elements (8a, 8b, 8c), said first and second attachment members (24, 18) of an extension element (8a, 8b, 8c) being capable of interacting, respectively, with the second and first attachment members (18, 24) of the other extension elements (8a, 8b, 8c), so as to allow an extension element (8a, 8b, 8c) to be fixed to one or more adjacent modular extension elements (8a, 8b, 8c).

3. The ready-to-install kit as claimed in claim 1 or 2, wherein the first temporary fastening member of the installation assistance flange (10) comprises a pin (13a, 13b) fitted movably on the installation assistance flange (10), and the second temporary fastening members of the extension element and of the first column end element comprise, in each case, an aperture (17) for receiving said pin (13a, 13b).

4. The ready-to-install kit as claimed in claim 3, wherein the aperture (17) for receiving the pin is an oblong aperture.

5. The ready-to-install kit as claimed in claim 4, wherein the aperture (17) for receiving the pin is formed, in the extension element (8a, 8b, 8c), near the second end of this element.

6. The ready-to-install kit as claimed in any of claims 1 to 5, wherein the extension element (8a, 8b, 8c) comprises a frame extending longitudinally between its first and second ends, the first and second attachment members (24, 18) of said extension element (8a, 8b, 8c) being carried by a connecting element (25) which is movable, relative to said frame, along the longitudinal direction of the frame, the second column end element (9) comprising a pulling device capable of exerting a pull on the attachment member (29) of the first end of the second column end element (9) in the direction of the second end of said second column end element, so as to allow a reduction of the play in the articulated arm support column when the extension element (8a, 8b, 8c) and the first and second column end elements (7, 9) are fixed to one another.

7. The ready-to-install kit as claimed in claim 6, wherein the second column end element (9) comprises a frame, the pulling device comprising a rod (28), movable relative to said frame, which has a first end carrying the attachment member (29) of the second column end element (9) and a second end ) interacting with a screw and nut system (30) and/or an actuator capable of moving said second end translationally.

8. The ready-to-install kit as claimed in claim 6 or 7, wherein the extension element (8a, 8b, 8c) comprises a device (26, 27, 21, 32, 33) for tensioning the connecting element (25), arranged so as to exert a pulling force on the connecting element (25) toward the second end of said extension element.

9. The ready-to-install kit as claimed in any of claims 1 to 8, wherein the extension element (8a, 8b, 8c) and the first and second column end elements (7, 9) each have a hollow frame to allow the passage of personnel and/or an electrical and/or hydraulic and/or pneumatic supply line for the articulated arm (5).

10. Equipment for carrying out maintenance and/or inspection operations, comprising a ready-to-install kit as claimed in any of claims 1 to 9, in an installed state, in which the installation assistance flange (10) is installed on the periphery of an opening (2) in an upper wall (3) of a tank (1), the first column end element (7), the second column end element (9) and at least one extension element (8a, 8b, 8c) being fixed to one another, and the fastening flange (21) of the second column end element is fastened at the periphery of the opening (2).

11. A method for assembling a ready-to-install kit as claimed in any of claims 1 to 9, on a tank (1) having an upper wall (3) provided with an opening (2), said method comprising, in succession:
- securing the installation assistance flange (10) to the periphery of the opening (2) of the tank (1);
- introducing the first column end element (7) into the tank (1), through the opening (2), and fastening the first column end element (7) to the installation assistance flange (10), using the first temporary fastening member (13a, 13b) of the installation assistance flange (10) and the second temporary fastening member of the first column end element (7);
- fixing an extension element (8a) to the first column end element (7), using the first attachment member (24) of the extension element (8a) and the attachment member (15) of the first column end element (7);
- releasing the fastening of the first column end element (7) to the installation assistance flange (10);
- introducing the extension element (8a), fixed to the first column end element (7), into the tank (1) through the opening (2), and fastening said extension element (8) to the installation assistance flange (10), using the first temporary fastening member (13a, 13b) of the installation assistance flange (10) and the second temporary fastening member (17) of the extension element (8a, 8b, 8c);
- fixing the second column end element (9) to the extension element (8a, 8b, 8c) fastened to the installation assistance flange (10), using the attachment member (29) of the second column end element (9) and the second attachment member (18) of the extension element (8a, 8b, 8c);
- releasing the fastening of the extension element (8a, 8b, 8c) which is fastened to the installation assistance flange (10);
- fastening the fastening flange (21) to the periphery of the opening (2) in the tank (1).

12. The assembly method as claimed in claim 11, further comprising, after the fastening of the extension element (8a) to the installation assistance flange, the following sequence of steps, carried out one or more times:
- fixing a subsequent extension element (8b, 8c) to a previous extension element (8a, 8b);
- releasing the fastening of the previous extension element (8a, 8b);
- introducing the subsequent extension element (8b, 8c) into the tank (1), through the opening (2), and fastening said subsequent extension element (8b, 8c) to the installation assistance flange (10), using the second temporary fastening member (13a, 13b) of the subsequent extension element (8b, 8c).

13. The assembly method as claimed in claim 11 or 12, comprising a step of reducing the play in the support column of an articulated arm (5), in which step an upward pulling force is applied to the attachment member (15) of the first column end element (7).
